# EUROPEAN PATENT APPLICATION

(11) **EP 4 760 156 A1**
(43) Date of publication of application: **17.06.2026**
(21) Application number: 25221646.0
(22) Date of filing: 09.12.2025
(51) Int. Cl.: F24D 19/10, F24D 3/10, F16K 31/50, F16K 1/52, F16K 31/53, F16K 37/00, G05D 7/00

(54) **SINGLE-BODY VALVE WITH DOUBLE CLOSING MEMBER**

(30) Priority: 11.12.2024 IT 202400028125
(71) Applicant: WATTS INDUSTRIES ITALIA S.r.l., 38121 Trento (IT)
(72) Inventor: CUCCINIELLO, Alfredo Marco, 38121 Frazione Gardolo - Trento (IT); FONTANA, Sergio, Trento (IT); ORNANO, Francesco Guido, 38121 Fraz. Gardolo - Trento (IT)
(74) Representative: Raimondi, Margherita

(57) **Abstract**

Single-body valve for regulating/interrupting the flow in a hydraulic circuit, comprising a valve body (101) extending along a first direction of flow (X-X) and comprising an axial duct (101a) with opposite openings (101b), two branch ducts (102) extending and arranged opposite each other in a second direction (Z-Z) different from the direction of flow; an internal partition (103) which divides the axial duct (101) into an upstream part M and a downstream part V communicating with each other via an aperture (103a); a first controlled-operation valve (200), the closing member of which can be actuated in both senses from a position for opening the aperture (103a) of the longitudinal duct (101a) into a position for varying/closing the said aperture, and vice versa; a second manually operated valve (300) which is situated opposite the first valve and the closing member (301) of which can be actuated in both senses of the same direction from a position for opening the aperture (103a) of the longitudinal duct (101a) into a raised position for closing the said aperture, and vice versa..

## Description

The present invention relates to a single-body valve with double closing member for regulating/interrupting the flow of a fluid circulating within a hydraulic circuit.

It is known in the technical sector relating to the construction of fluid distribution networks that there exists the need to provide multi-path header elements for the outward/return flow of the fluid towards/from the end user appliances; an example of these applications consists of the delivery and return headers of the water distribution piping for thermos-sanitary or heating plants, comprising a delivery header provided with flowmeters arranged opposite each branch duct, a return header, provided with regulating valves arranged opposite each branch duct, a manual valve for shutting off the flow, arranged upstream of the delivery duct and downstream of the return duct.

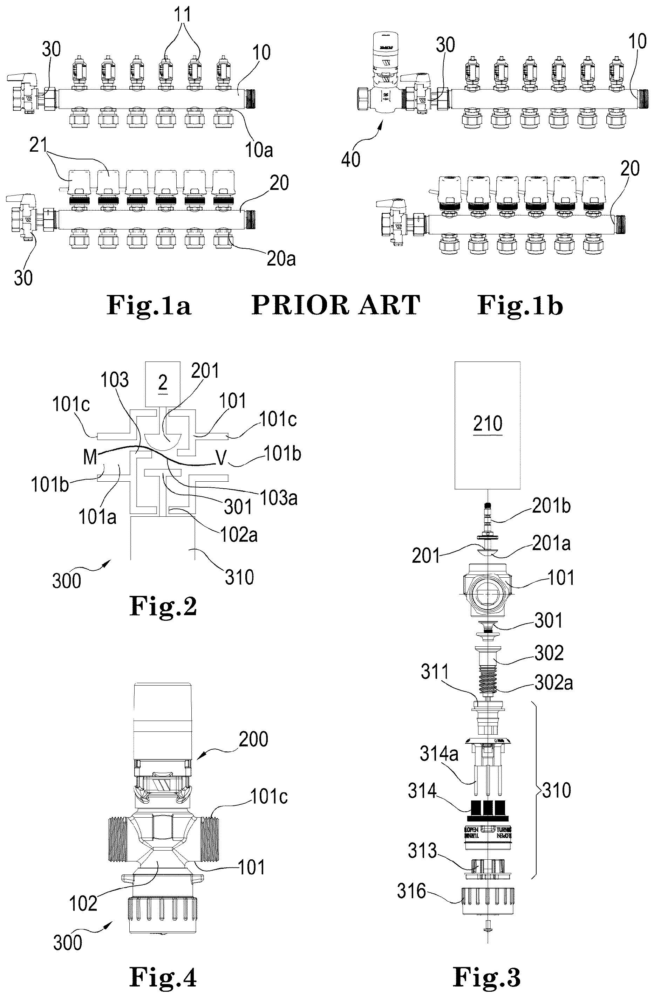

Figs. 1a and 1b show partial examples according to the prior art of components of a distribution circuit.

In greater detail (Fig. 1a) a known solution for managing these plants involves measuring the flowrate in each branch of the circuit by means of flowrate measuring devices 11 (flowmeters) arranged in one of the two headers - generally in the delivery header 10 - opposite each branch duct 10a of the respective branch of the circuit and performing regulation of the flowrate and/or opening/closing of the branch itself by means of a regulating valve 21 arranged in the other header - generally the return header 20 - opposite the respective return delivery duct 20a.

It is also known that, in the event of maintenance and/or leakage of one or more of the branches thereof, the plant must be isolated by mounting a valve 30, normally of the ball type with manual operating lever, in order to perform a general shut-off of the flow both upstream of the header and downstream of the return header.

The growing focus on energy savings together with improved comfort conditions, as for example in the case of radiant panel heating, has resulted in the use of dynamic network balancing devices which are mounted on the headers of the circuit both upstream of the shut-off valve of the delivery header and downstream of the shut-off valve of the return header.

Said devices (Fig. 1b) include the so-called DPCV (Differential Pressure Control Valve) 40.

Such an additional balancing valve, arranged in series with the shut-off valve, results in axial elongation of the finished valves for installation.

Said elongation is undesirable since it poses problems with regard to housing the assembly inside the branching boxes which are in turn inserted in the walls of the buildings to be heated, it being increasingly required that said boxes should have small dimensions.

The technical problem which is posed therefore is that of providing a valve for controlling the flow of a fluid inside a distribution header which is able to limit the axial dimensions thereof, ensuring regulation of the heating flow under normal operating conditions, as well as reliable shutting off of the heating fluid flow in the event of maintenance work and/or leakages in the branches of the circuit; in this respect it is also important that there should be a clear visual indication as to the open or closed condition of the valve so that work may be carried safely on the hydraulic circuit.

In connection with this problem it is also required that the valve should be able to detect variations in the pressure more accurately that the known valves.

In connection with this problem it is also required that such a valve should be easy and inexpensive to produce, assemble and mount on a header and should also result in a limited final weight when finished and installed.

These results are achieved according to the present invention by a single-body valve for regulating/interrupting the flow in a hydraulic circuit according to the characteristic features of Claim 1.

Further details may be obtained from the following description of a nonlimiting example of embodiment of the subject of the present invention provided with reference to the attached drawings in which:
- Figure 1a:: shows a perspective view of a delivery header and a
- Figure 1b:: return header according to the prior art; shows a perspective view of a return header according to the prior art;
- Figure 2:: shows the functional diagram of a regulating valve according to the invention;
- Figure 3:: shows an exploded view of a first example of embodiment of a regulating valve according to the present invention;
- Figure 4:: shows a front view of the valve according to Fig. 3 in the assembled condition;
- Figure 5:: shows a vertical cross-section through the valve of Fig. 4 in the normal flow condition;
- Figure 6:: shows an axonometric view of one of the components of the epicyclic actuating assembly;
- Figures 7a-7b:: show perspective views of the components of the epicyclic actuating assembly in the assembled condition;
- Figures 8a-8b:: show front views of the handgrip for operating the epicyclic assembly with visual indication ring;
- Figure 9:: shows a vertical cross-section through the valve of Fig. 4 in the flow shut-off condition;
- Figure 10:: shows a vertical cross-section through a delivery header with regulating valve according to the invention; and
- Figure 11:: shows a perspective view of a distribution assembly for a hydraulic plant with regulating valve according to the invention and pressure difference detection device.

As shown and assumed, merely for the sake of simpler description, a pair of axes, i.e. a longitudinal axis X-X, corresponding to the direction of flow of the fluid inside a header, and transverse/vertical axis Z-Z, perpendicular thereto, a valve 100 according to the invention for regulating/intercepting the flow of fluid circulating in the plant, comprises:
- a body 101 with an axial duct 101a and openings 101b at the opposite longitudinal ends of the said duct; at the opposite ends of the longitudinal duct the valve body has a respective threading 101c;
the valve body also has two hollow branch ducts 102, with a respective threading 102a, extending in the vertical direction Z-Z and arranged opposite each other in the same direction.

An internal partition 103 divides the axial duct 101 into an upstream part M and a downstream part V communicating with each other only via a vertical-axis aperture 103a formed in a longitudinal section of the partition.

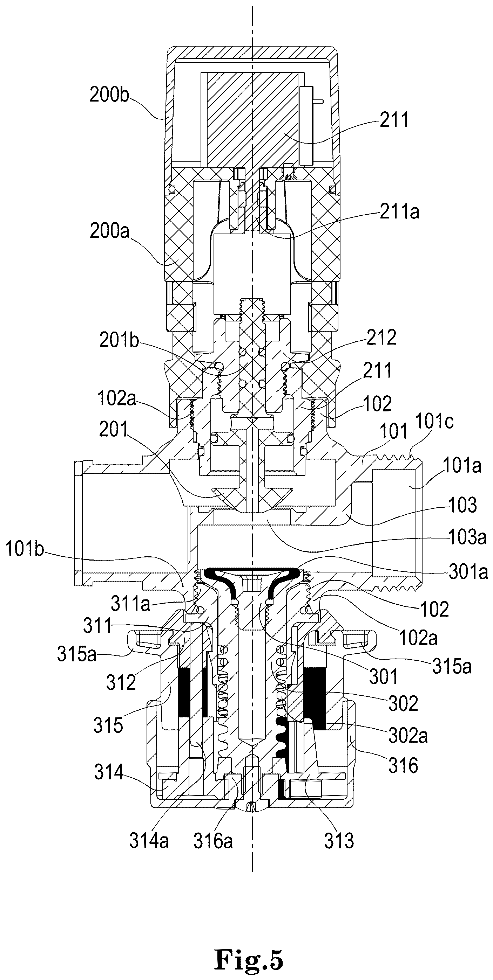

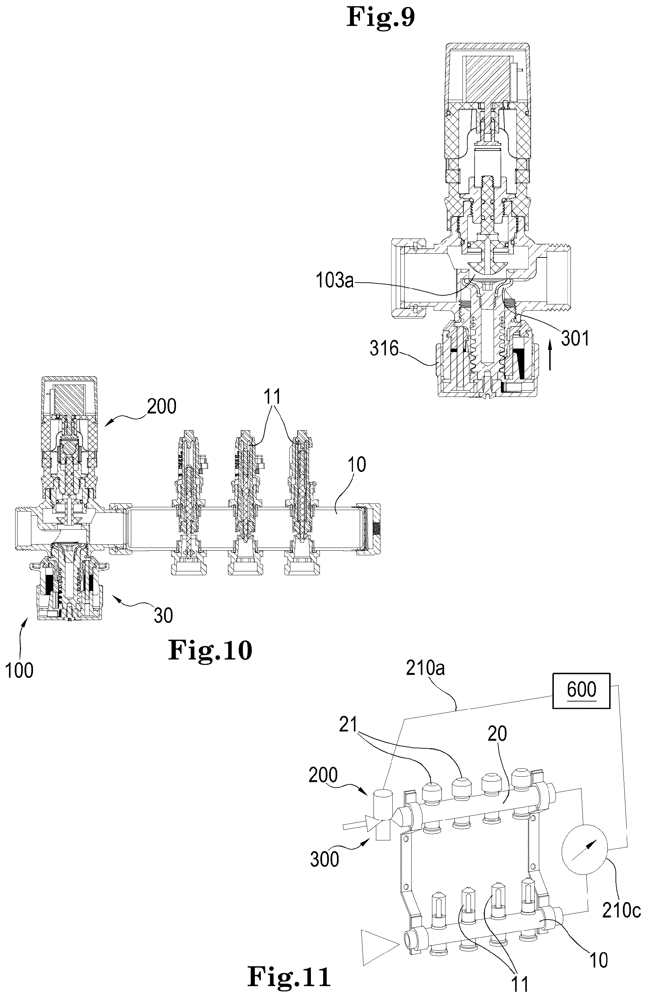

The following are mounted on the valve body:
-- a first upper valve 200 in the transverse direction Z-Z, the closing member 201 of which can be operated in both senses of the vertical direction from a raised position for opening the longitudinal aperture 103a, so as to allow flowing of the fluid, into a lowered position for regulating/closing the said aperture, in order to regulate/prevent flowing of the fluid; according to the invention, the closing member is controlled by an electronic actuating unit 210 designed to operate the closing member depending on a signal 210a (Fig. 11), received from a sensor 210c for detecting a pressure difference Δp detected in the hydraulic circuit and processed by a data processing board 600, as will become clearer below;
-- a second lower valve 300 in the direction Z-Z, the closing member 301 of which can be operated in both senses of the said vertical direction from a lowered position (Fig. 5) for opening the aperture 103a of the partition 103, designed to allow flowing of the fluid, into a raised position (Fig. 9) for closing the said aperture 103a, for interrupting the fluid flow.

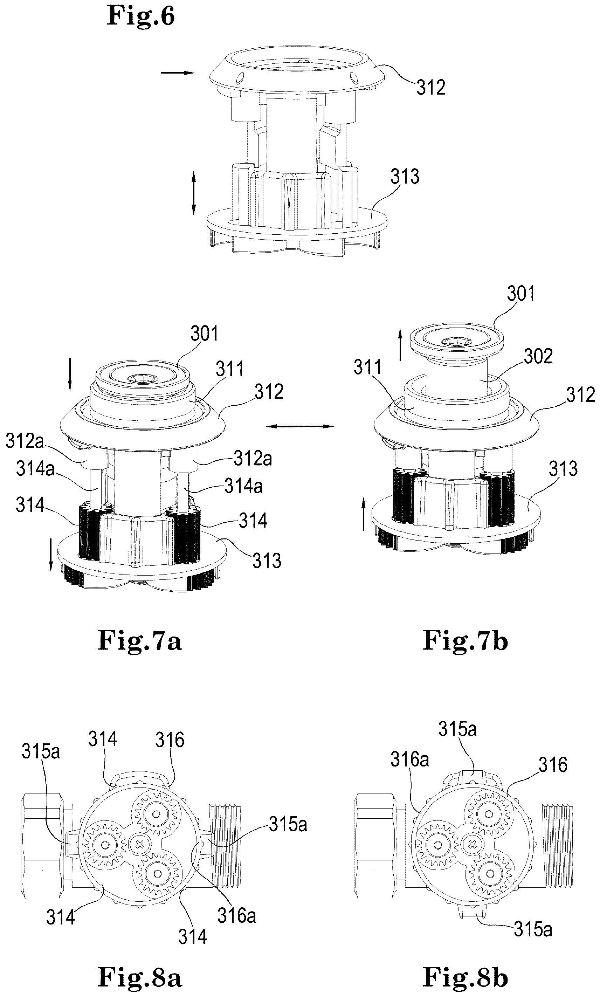

The second lower valve is manually operated by means of an epicyclic type actuating assembly 310 described below with reference to Figs.6-8.

In greater detail (see Figs. 3, 5) the first upper valve 200 comprises:
- a first hollow sleeve 211 with bottom threading for connection with the threading of the upper extension 102a and a second top threading for connection with:
   - a second threaded sleeve 212;

the two sleeves, once coupled together to the transverse direction Z-Z, form a vertical-axis guide for:
   - the closing member 201 movable inside the guide in both senses of the vertical direction Z-Z;
the closing member has a substantially round-shaped form 201a, configured to interfere with the aperture 103a of the partition 103 of the valve body, reducing/increasing the opening thereof, and an upper shank 201b, the top end of which is threaded for connection with the actuating assembly 310 for actuating the said closing member.

According to the invention, the actuating unit 210 for actuating the top closing member comprises an electric motor 211 which can be rotationally operated in both senses, i.e. clockwise and anti-clockwise, and the shaft 211a of which is connected to an element for engaging with the upper shank 201b of the closing member so as to cause the downward/upward movement thereof towards the aperture 103a of the partition of the valve body.

The component parts of the regulating valve 200 are contained inside a body 200a closed at the top by a cover 200b.

With reference to Figs. 3, 5, the lower valve 300 comprises:
-- a closing member 301 with an anti-extraction gasket 301a, integral with a slider 302 - preferably round - provided with a thread 302a and movable in both senses of the vertical direction Z-Z upon actuation of the epicyclic assembly 310;
   - the actuating assembly 310 comprises (Figs. 6-7)
-- a guide 311 with threading 311a screwed onto the bottom extension 101b of the valve body and female thread suitable for engagement with the thread 302a of the slider 302 so as to allow translation in both senses of the latter;
-- a spacer (312) engaged with the guide (311) and fixed to it (Fig. 5);
-- a ring 313 (Figs. 5,6,7) engaged with the spacer 312 and movable, without rotation, with respect thereto from a lowered position (Fig. 7a) into a raised position (Fig. 7b);
-- planet wheels 314 inserted in the ring 313 and movable together therewith on respective vertical guides 314a, the top end of which is inserted inside corresponding seats 312a of the spacer 312;
-- a ring nut 315 with diametral flanges 315a, which is inserted coaxially on the spacer 312 and provided with inner teeth for meshing with the planet wheels 314; the ring nut is axially fixed, but movable rotationally through an angle of 90° designed to bring the two flanges 315a from a position substantially parallel to the longitudinal axis X-X of the valve body, into a position at right angles to the latter; as will become clear below the two positions will correspond during use to the open valve or closed valve condition;
-- a handgrip 316 (Figs. 4,5,8), the inner surface of which has teeth 316a designed to mesh with the planet wheels 314; the handgrip is axially constrained to the ring 313 by means of a fixing screw; the handgrip is movable rotationally, upon manual operation, in both senses, i.e. clockwise and anti-clockwise, so as to cause actuation of the epicyclic assembly and is axially slidable on the ring nut so as to cause axial raising/lowering of the slider 302 and therefore of the closing member 301 towards/away from the aperture 103a of the inner partition 103 of the valve body.

With the configuration described above and with reference to Fig. 11, operation of the regulating valve is described below:
- the valve according to the invention is fitted to one of the two headers (return header 20 in the example shown) of the hydraulic circuit;
- the initial position of the closing member 201 of the regulating valve 200 is defined depending on the project specifications;
- the sensor 210c for detecting the variation in pressure Δp is connected;
- the handgrip 316 of the lower valve is rotated, causing actuation of the epicyclic assembly which moves the closing member 301 of the shut-off valve into the open position designed to allow flowing of the fluid from upstream M to the downstream V through the aperture 103a;
- the rotation of the handgrip also causes rotation of the ring nut 315 which positions the flanges 315 with a longitudinal orientation X-X for a clear visual indication that the valve is open;
- upon detection of a variation Δp in the differential pressure with consequent sending of a corresponding signal to the control board and from there to the motor of the upper regulating valve;
- the motor is operated in one of the two directions of rotation so as to suitably adjust the position of the closing member 201 and therefore of the flowrate of the fluid in the header;
- in the event of maintenance of the hydraulic circuit requiring shutting off of the fluid flow, the handgrip 316 of the shut-off valve is operated in the opposite direction to the above direction so as to operate the epicyclic assembly and move the closing member 301 against the aperture 103a (Fig. 9), causing closing thereof with consequent interruption of the fluid flow;
- the rotation of the handgrip also causes rotation of the ring nut 315 which positions the flanges 315 with a vertical orientation Z-Z for a clear visual indication that the valve is closed.

It is therefore clear how the valve according to the invention combines, within a single axial dimension, the two functions of regulating the flowrate and interrupting the flow, resulting in a substantial reduction in the overall axial dimensions of the header to which it is fitted.

Although described with reference to the orientations shown in the figures of the example, embodiments of the valve with different relative inclinations of the axes for flow and operation of the closing members fall within the scope of the invention.

The particular structure of the valve also allows rapid fitting thereof to the headers of the hydraulic fluid circuit, resulting also in faster and more precise regulation during start-up of the plant when the design flowrates are set and repeated activation/interruption of the flow is required.

Although described in connection with a number of embodiments and a number of preferred examples of implementation of the invention, it is understood that the scope of protection of the present patent is determined solely by the claims below.

## Claims

1. Single-body valve for regulating/interrupting the flow in a hydraulic circuit, comprising:
- a valve body (101) extending along a first direction of flow (X-X) and comprising:
-- an axial duct (101a) with opposite openings (101b) and associated corresponding opposite threading (101c),
-- two hollow branch ducts (102), with respective threading (102a), extending and arranged opposite each other in a second direction (Z-Z) different from the direction of flow;
- - an internal partition (103) which divides the axial duct (101) into an upstream part M and a downstream part V communicating with each other via an aperture (103a);
- a first controlled-operation valve (200) which is connected to the upper branch duct in the second direction (Z-Z) and the closing member (201) of which can be actuated in both senses of the same direction from a raised position for opening the aperture (103a) of the longitudinal duct (101a) into a lowered position for varying/closing the said aperture, and vice versa;
- a second manually operated valve (300) which is situated opposite the first valve and is connected to the lower branch duct in the second direction (Z-Z) and the closing member (301) of which can be actuated in both senses of the same direction from a lowered position for opening the aperture (103a) of the longitudinal duct (101a) into a raised position for closing the said aperture, and vice versa, **characterized in that** the closing member (301) of the second valve (300) is moved by an epicyclic actuating assembly (310) comprising:
- a guide (311) screwed onto the bottom extension (101b) of the valve body;
- a spacer (312) engaged with the guide (311) and fixed to it;
- a ring (313) engaged with the cover and movable with respect thereto from a lowered position into a raised position, and vice versa;
- planet wheels (314) inserted in the ring (313) and displaceable together therewith,
- a handgrip (316), the inner surface of which has teeth (316a) designed to mesh with the planet wheels (314), the handgrip being movable rotationally, in both the clockwise and the anti-clockwise direction, so as to cause actuation of the epicyclic assembly and being axially slidable on the ring nut so as to cause axial raising/lowering of the slider and therefore of the closing member towards/away from the aperture of the internal partition of the valve body.

2. Single-body valve according to Claim 1, **characterized in that** the closing member (201) of the first valve is controlled by an electronic actuating unit (210) designed to operate the closing member depending on a signal (210a) received from a sensor (210a) for detecting a pressure difference Δp detected in the hydraulic circuit and processed by a data processing board (600).

3. Single-body valve according to Claim 1 or 2, **characterized in that** the closing member (201) has a substantially round-shaped form (201a) configured to interfere with the aperture (103a) of the partition (103) of the valve body, reducing/increasing the opening thereof, and an upper shank (201b), the top end of which is threaded for connection with the actuating unit (210) for actuating the said closing member.

4. Single-body valve according to the preceding claims, **characterized in that** the actuating unit (210) for actuating the closing member of the first valve comprises an electric motor (211) which can be rotationally operated in both senses, i.e. clockwise and anti-clockwise, and the shaft (211a) of which is connected to the upper shank (201b) of the closing member.

5. Single-body valve according to the preceding claim, **characterized in that** it comprises a ring nut (315) with diametral flanges (315a), which is axially fixed, but rotationally movable through an angle of 90° designed to move the two flanges (315a) from a position substantially parallel to the first direction (X-X) of the valve body, into a position at right angles thereto.

6. Single-body valve according to one of the preceding claims, **characterized in that** it comprises a guide parallel to the first direction of flow for the closing member (201) of the first valve (200), the guide comprising a first hollow sleeve (211) with a bottom threading for connection with the threading of the upper extension (102a) of the valve body and a second top threading for connection with a second threaded sleeve (212).

7. Thermo-sanitary plant, comprising a delivery header (10) provided with flowmeters (11) arranged opposite each respective flow branch duct (10a), a return header (20) provided with regulating valves (21) arranged opposite each respective branch duct (20a), a manual valve (30) for intercepting the flow, arranged upstream of the delivery duct (10) and/or downstream of the return duct (20), **characterized in that** it comprises a single-body valve with double closing member for regulating/shutting off the flow through at least one of the two headers according to Claims 1-6.

8. Thermo-sanitary plant according to the preceding claim, **characterized in that** it is a panel-type heating plant.
